# EUROPEAN PATENT SPECIFICATION

(11) **EP 1 084 639 B1**
(45) Date of publication and mention of the grant of the patent: **07.05.2003**
(21) Application number: 00102480.1
(22) Date of filing: 04.02.2000
(51) Int. Cl.: A43B 7/00, C01B 13/11

(54) **A footwear containing an ozone generating apparatus**
Schuhwerk mit einer Vorrichtung zur Erzeugung von Ozon
Article chaussant contenant un appareil produisant de l'ozone

(30) Priority: 16.09.1999 KR 9939947; 23.10.1999 WO PCT/KR99/00640
(43) Date of publication of application: 21.03.2001
(73) Proprietor: An, Sun Tae, Kumjung-Gu, Pusan 609-311 (KR)
(72) Inventor: An, Sun Tae, Kumjung-Gu, Pusan 609-311 (KR); Erofeev, Anatoliy Aleksandrovich, Saint-Petersburg 195213 (RU)
(74) Representative: Weber, Joachim, Dr.

(56) References cited:
- WO-A-00/07473
- KR-Y- 141 524
- US-A- 5 911 957
- PATENT ABSTRACTS OF JAPAN vol. 1999, no. 11, 30 September 1999 (1999-09-30) & JP 11 158676 A (MITSUBISHI ELECTRIC CORP), 15 June 1999 (1999-06-15)

## Description

The present invention relates to a sanitized footwear in which an ozone generating apparatus is provided so as to suppress the propagation of bacteria, to thereby prevent and cure athlete's foot.

A conventional footwear is ill-ventilated and allows for the propagation of various kinds of bacteria, emitting a bad smell. Therefore, it is hard to prevent the bacteria, which makes athlete's foot worse.

To address the above-mentioned problem, a footwear having an air pump which forcedly draws the air from outside of the footwear has developed. However, such an air pumping system is not enough to exterminate bacteria and prevent and cure athlete's foot.

Recently, the so-called "function footwear" which is provided with various kinds of functions, for example, ventilation and suppression of bacteria, in addition to the protection of foot, has been developed.

However, such a conventional footwear only has a simple structure in that indirect functions, for example, an enhancement of cushion effect or an ventilation is achieved. That is, a direct prevention against the bacteria in the footwear has not been attempted.

KR-141 524 discloses a hygienic footwear having a pump, a check valve, conduits and an ozone generator. During walking, the wearer presses on the pump to provide ozone into the inside of the footwear.

Therefore, it is an object of the present invention to provide a footwear suppressing propagation of bacteria and having a more compact structure.

This object is solved by a footwear according to claim 1. The sub-claims contain further preferred modifications of the present invention.

A footwear according to the present invention comprises an ozone generating apparatus being operated by a pressing power produced by a wearer during walking. Further, the ozone generating apparatus is arranged in a heel of the footwear.

According to a preferred embodiment of the present invention, the ozone generating apparatus comprises an electrical discharge device.

Preferably, the electrical discharge device is a spark electrode.

Further preferably, an electrical energy is produced by a piezo ceramic element.

According to another aspect of the present invention, the piezo ceramic element is operated by a driving lever and a driving plate.

That is the present invention provides a footwear having a piezo ceramic element which converts mechanical motion energy into electrical energy. When a person wearing the footwear of the present invention walks, an electrical discharge effect of the present invention allows for a ventilation and a sterilization of the footwear.

Thus, the footwear according to the invention has an electrical discharge element which converts a motion energy to an electrical energy using a footwearer's weight without an additional motive power, generating ozone in the footwear so as to thereby exterminate and suppress bacteria.

That is, according to the invention a footwear containing an ozone generating apparatus is proposed. Said footwear has at the inner part of a heel thereof a metal or a resin casing having a piezo ceramic element and a driving lever at a pin shaft of said casing. Said driving lever is coupled with a driving plate. A spark electrode which includes an electricity generated by a piezo effect discharges into the footwear when said piezo ceramic element is compressed by a pressing power of a wearer when the wearer walks, whereby generating ozone in said footwear.

In the following there is given a brief description of the drawings, wherein
FIG.1 is a sectional view illustrating the configuration of the present invention and
FIG.2 is an exploded perspective view illustrating the main parts of the present invention.

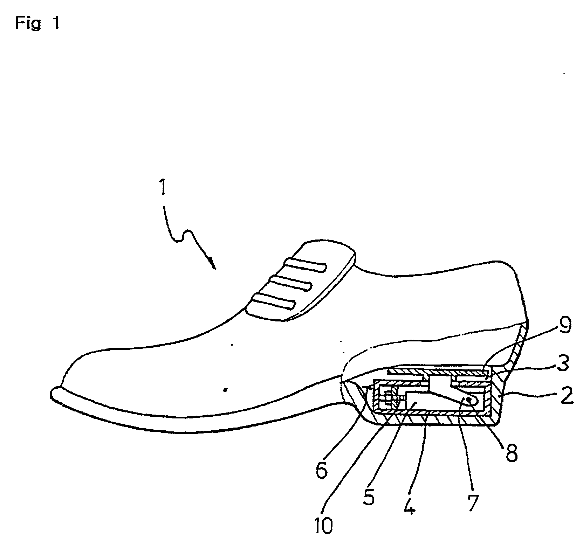

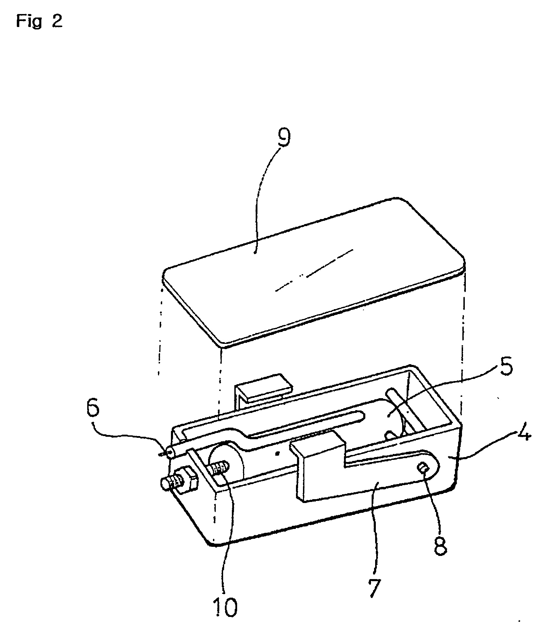

FIG. 1 is a sectional view of the embodiment the present invention, and FIG. 2 is an exploded perspective view of the main parts of the present invention.

An inserting element 3 is installed to a heel 2 of a footwear 1, to have an electrical discharge device.

The electrical discharge device is structured in that a driving lever 7 is bent upward, at both side surfaces of a casing 4, from a pin shaft 8, and a driving plate 9 which is to be pressed by a heel of a foot is coupled onto driving lever 7.

A piezo ceramic element 5 to be connected with pin shaft 8 is provided in casing 4.

When rotation energy is supplied to pin shaft 8 of driving lever 7, electrical energy from piezo electric effect causes, via a spark electrode 6, discharge three to five times per one operation of piezo ceramic element 5.

A small-sized product which is now available in the market may be used as piezo ceramic element 5. Piezo ceramic element 5 will be referred to as a piezo element 5, hereinafter.

Piezo element 5 is accommodated into casing 4, and is supported by pin shaft 8 and a fixing bolt 10. When driving lever 7 is lowered by a heel of a foot (when the foot touches the ground), or when driving lever 7 is released from a heel of a foot (when the foot is apart from the ground), piezo element 5 returns upward by restoring means which use spring operation of driving lever 7.

Drive motion energy of pin shaft 8 is discharged as an electrical energy via spark electrode 6 and is outlet to the air footwear. Such a discharge takes place three to five times when driving plate 9 is lowered, and three to five times again when driving plate 9 is raised.

When the discharge occurs via spark electrode 6, oxygen in the air ionized and ozonized (4O₂ → 2O₃ + O₂). The-thus generated ozone affects through the footwear, to thereby suppress and extermination bacteria. In addition, the ozone eliminates bad smell in the footwear and significantly contributes to the prevention and curing of athlete's foot.

Accordingly, when the wearer walks with such a footwear on. the bad smell will be removed and he can be protected from the athlete's foot. In addition, inner portion of the footwear will always stay clean.

As described above, the present invention is provided with piezo ceramic element for converting mechanical motion energy electric energy and drives such a piezo ceramic element by of a wearer's body. Thus, ozone is generated inside of the caused by a discharge effect, so as to suppress and ex, bacteria in the footwear, to thereby prevent and cure athlete's foot.

In conclusion, the present invention provides a sanitized footwear 1 in which an ozone generating apparatus is provided so as to suppress the propagation of bacteria, to thereby prevent and cure athlete's foot, and the footwear has at the inner part of a heel 2 thereof a metal or a resin casing 4 having a piezo ceramic element 5 and a driving lever 7 at a pin shaft 8 of the casing, the driving lever 7 is coupled with a driving plate 9, a spark electrode 6 which includes an electricity generated by a piezo effect into the footwear 1 when the piezo ceramic element 5 is compressed by a pressing power of a wearer, when the wearer walks, whereby generating ozone in the footwear.

## Claims

1. Footwear comprising an ozone generating apparatus (5, 6, 7, 8, 9,) being operated by a pressing power produced by a wearer during walking, **characterized in that** the ozone generating apparatus is arranged in a heel (2) of the footwear (1).

2. Footwear according to claim 1, **characterized in that** the ozone generating apparatus comprises an electrical discharge device.

3. Footwear according to claim 2, **characterized in that** the electrical discharge device is a spark electrode (6).

4. Footwear according to claim 2 or 3, **characterized in that** an electrical energy is produced by a piezo ceramic element (5).

5. Footwear according to claim 4, **characterized in that** the piezo ceramic element (5) is operated by a driving lever (7) and a driving plate (9).

## Patentansprüche

1. Schuhwerk mit einer Vorrichtung (5, 6, 7, 8, 9) zur Erzeugung von Ozon, wobei die Vorrichtung durch eine Druckkraft, die vom Träger während des Gehens erzeugt wird, betrieben wird, **dadurch gekennzeichnet, dass** die Vorrichtung zur Erzeugung von Ozon in einem Absatz (2) des Schuhwerks (1) angeordnet ist.

2. Schuhwerk nach Anspruch 1, **dadurch gekennzeichnet, dass** die Vorrichtung zur Erzeugung von Ozon eine elektrische Entladeeinrichtung umfasst.

3. Schuhwerk nach Anspruch 2, **dadurch gekennzeichnet, dass** die elektrische Entladeeinrichtung eine Funkenelektrode (6) ist.

4. Schuhwerk nach Anspruch 2 oder 3, **dadurch gekennzeichnet, dass** eine elektrische Energie durch ein piezo-keramisches Element (5) erzeugt wird.

5. Schuhwerk nach Anspruch 4, **dadurch gekennzeichnet, dass** das piezo-keramische Element (5) durch einen Antriebshebel (7) und eine Antriebsplatte (9) betrieben wird.

## Revendications

1. Article chaussant comprenant un appareil produisant de l'ozone (5, 6, 7, 8, 9) étant actionné par une puissance de pression produite par un porteur de l'article chaussant pendant la marche, **caractérisé en ce que** l'appareil produisant de l'ozone est disposé dans un talon (2) de l'article chaussant (1).

2. Article chaussant selon la revendication 1, **caractérisé en ce que** l'appareil produisant de l'ozone comprend un dispositif de décharge électrique.

3. Article chaussant selon la revendication 2, **caractérisé en ce que** le dispositif de décharge électrique est une électrode à étincelle (6).

4. Article chaussant selon la revendication 2 ou 3, **caractérisé en ce qu'**une énergie électrique est produite par un élément en céramique piézoélectrique (5).

5. Article chaussant selon la revendication 4, **caractérisé en ce que** l'élément en céramique piézoélectrique (5) est actionné par un levier d'entraînement (7) et une plaque d'entraînement (9).
